(19)

Europäisches
Patentamt
European
Patent Office
Office européen
des brevets

(11) **EP 4 760 270 A1**

(12) **EUROPEAN PATENT APPLICATION**

(43) Date of publication:
**17.06.2026 Bulletin 2026/25**

(21) Application number: **25223142.8**

(22) Date of filing: **12.12.2025**

(51) International Patent Classification (IPC):
**G01P 15/125** (2006.01) **G01P 21/00** (2006.01)

(52) Cooperative Patent Classification (CPC):
**G01P 15/125; G01P 21/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.12.2024 IT 202400028587**

(71) Applicant: **STMicroelectronics International N.V. 1228 Plan-les-Ouates, Geneva (CH)**

(72) Inventor: **GIANCRISTOFARO, Lorenzo I-20142 Milano (IT)**

(74) Representative: **Buzzi, Notaro & Antonielli d'Oulx S.p.A.**
**Corso Vittorio Emanuele II, 6**
**10123 Torino (IT)**

(54) **COMPENSATION CIRCUIT, CORRESPONDING DEVICE AND METHOD**

(57)      An offset compensation and linearization circuit is provided for accelerometer sensors including first and second sensing capacitors charged to first and second charge values and exhibiting a capacitance unbalance in response to acceleration applied to the sensor. A first differential stage coupled to the first and second sensing capacitors provides a differential signal indicative of the difference between the second charge and the first charge, the difference being indicative of acceleration applied to the sensor. A second differential stage is coupled to the first and second sensing capacitors at first and second sensing nodes and provides a common mode signal based on the difference between a reference voltage and a voltage indicative of a mean value of the input voltages at the first and second sensing nodes. An analog-to-digital converter converts the ratio of the differential signal from the first differential stage to the common mode signal from the second differential stage. This latter stage comprises capacitive feedback paths from the output of the second differential stage having a first capacitance value and a second capacitance value wherein the first capacitance value is different from the second capacitance value.

FIG. 4

**Description**

Technical field

The description relates to compensation circuits.

One or more embodiments can be applied, for instance, to capacitive differential sensors such as accelerometers where offset compensation and high readout linearity are desirable features.

MEMS (Micro Electro-Mechanical System) accelerometers are exemplary of accelerometers where solutions as described herein can be advantageously applied.

Description of the related art

Specifications for accelerometers such as MEMS accelerometers dictate a high sensitivity to external acceleration. This can be provided with parallel plate (PP) readout capacitors, which are very sensitive to small external accelerations (~1g) and tend to be highly non-linear with respect to large external accelerations (~16g, 32g or even more).

An electronic chain configured to convert mechanical variations of the sensing capacitors caused by external acceleration into a voltage signal can also be configured to palliate the intrinsic non-linearity of the readout.

Document EP 1 790 988 B1 and the corresponding US Patent 9 201 090 B2 can be referred to for an extensive discussion of the related issues.

Documents such as CN 114679141A, US 9461625 B1, US 2006/213270 A1, US 2007/163815 A1, US 2009/223276 A1, US2015/268268 A1, US 2021/405085A1, US 2021/190615 A1, US 2024/171188 A1, US 8 094 839 B2, and US 10 527 643 B2 provide additional insight into the related art.

Conventional solutions may be based on a switched-capacitance (switched-cap) analog front end, wherein the communication between a MEMS sensor and an Application Specific Integrated Circuit, ASIC is fully analog and takes place through one rotor pad and two stator pads.

The impedance "seen" by the ASIC from the rotor pad to the stator pads can be represented as two sensing capacitors whose capacitance difference depends on the position of the movable mass, which in turn is directly proportional to the external acceleration with a negligible non-linearity.

The sensing capacitance difference is proportional with a negligible non-linearity to small external accelerations. When accelarations become much greater than gravity (that is, in the presence of high input accelerations), the output from the ADC stage is no longer linear with the position of the movable mass. The non-linearity in the external acceleration v. delta sensing cap curve is visible at high accelerations. For instance, assuming a full-scale value of 16g, non-linearity has a noticeable impact above 8g, while at 1g sensor behavior is still quite linear.

Certain sensors include an offset compensation system ("coarse offset") to subtract a portion of charge difference added by the natural sensor offset, so that only the charge difference generated by an external acceleration is read.

This feature may involve trimmable capacitors connected to the virtual grounds driven by a transition analogous (or opposite depending on the natural coarse offset sign) to that of the MEMS rotor.

It is observed that such a coarse offset compensation strategy relies on constant charge injection into virtual grounds, so it does not follow MEMS non-linearity versus external acceleration. This solution makes non-linearity worse in accelerometers affected by a high "natural" sensor offset. A problem with these systems is that, for high accelerations, the natural offset of the sensor appears to move, while the one generated by the coarse offset remains still: this results in a sort of additional non-linearity.

Various conventional solutions may include a Digital Signal Processor (DSP) for linearity correction based on polynomial shaping, namely based on coefficients.

This solution is notionally simple to implement as it is based on mathematical calculations adapted to compensate for the non-linearity of the MEMS, but has various drawbacks:

polynomial DSPs as normally used are of the third order and involve various multiplications and additions; this translates into an important area requirement, with an ensuing increased cost of the ASIC, and energy consumption;

polynomials to be used are not easy to select: an "optimal" polynomial can be identified that is theoretically different for each instance of mechanical sensor; polynomials selected per sensor family may not fit equally well to all specimens in a family, with non-linearity rectified less satisfactorily in certain specimens; and

complying with low-power specifications oftentimes leads to filtering and decimating the data stream from an analog-to-digital converter (ADC) before DSP processing, which is non-linear; performance may thus be penalized, especially for "fast" signals: filtering before DSP rectification/correction is thus detrimental to linearity.

Object and summary

An object of solutions as described herein is to contribute in addressing the various issues outlined in the foregoing.

According to one or more solutions as described herein, such an object can be achieved via a circuit having the features set forth in the claims that follow.

One or more solutions as described herein relate to a corresponding device. A MEMS accelerometer may be exemplary of such a device.

One or more solutions as described herein relate to a corresponding method.

The claims are an integral part of the technical teaching provided herein in respect of the embodiments.

Solutions as described herein include an analog front-end configured to store a first signal that is directly proportional to the external acceleration (proportional to the position of the movable mass) as well as a second signal that is proportional to the MEMS sensing capacitors sum.

In such architecture:

an input common-mode feedback control (ICMFB) subsystem can be provided intended to manage the common mode charge in so far as the voltage signal at ICMFB output is a useful information that can be used to correct non-linearity with the capability of implementing offset compensation (coarse offset) by subtracting a portion of charge difference added by the natural sensor offset, so that only the charge difference generated by external acceleration can be effectively read; and

the ICMFB subsystem can be supplemented with differential trimmable capacitances (one "positive", one "negative") connected to the virtual grounds of a main operational amplifier and driven by an operational amplifier associated with the ICMFB subsystem.

Brief description of the annexed figures

One or more embodiments will now be described, by way of example only, with reference to the annexed figures, wherein:

Figure 1 is a diagram of electronic circuitry suited to be coupled to an accelerometer such as a MEMS (Micro Electro-Mechanical System) accelerometer;

Figure 2 is a circuit diagram illustrative of a basic concept underlying electronic circuitry according to solutions as described herein;

Figure 3 is a circuit diagram illustrative of a way of implementing solutions as described herein;

Figure 4 is a circuit diagram illustrative of a further way of implementing solutions as described herein;

Figure 5 is a circuit diagram illustrative of possible further details of solutions as described herein;

Figure 6 is a circuit diagram illustrative of the possibility of implementing solutions as described herein within a continuous-time chain as an alternative to a switched capacitors (switched-cap) chain; and

Figure 7 is a block diagram illustrative of the possible use of solutions as described herein in an accelerometer.

The figures are drawn to clearly illustrate relevant aspects of the solutions described herein and are not necessarily drawn to scale.

The edges of features drawn in the figures do not necessarily indicate the termination of the extent of the feature.

Detailed description of exemplary embodiments

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular configurations, structures, or characteristics may be combined in any adequate way in one or more embodiments.

The headings/references used herein are provided merely for convenience and hence do not define the extent of protection or the scope of the embodiments.

Unless the context indicates otherwise, like parts or elements are indicated throughout the figures annexed herein with like references/numerals and a corresponding description will not be repeated for the sake of brevity.

For the sake of simplicity and ease of explanation, a same designation may be applied throughout this description to designate:

> a node or line as well as a signal occurring at that node or line;
> a component (such as a capacitor, resistor or inductor of coil) as well as electrical parameters (capacitance, resistance, inductance) thereof.

Also, when it is mentioned that an element is "connected to" or "coupled to" another element, it should be understood that still another element may be interposed therebetween as well as that the element may be connected or coupled directly to another element.

On the contrary, when it is possibly mentioned that an element is "connected directly to" or "coupled directly to" another element, it should be understood that still another element is not interposed therebetween.

Capacitive differential sensors can be used in a variety of applications such as - merely by way of example - inertial sensors, accelerometers, pressure or force sensors. Low supply voltages and low power consumption make these sensors ideally suited for use in battery-powered portable devices (PDAs, digital audio players, cellphones, digital camcorders and the like).

Capacitive differential sensors base their operation on capacitive unbalancing that is a function of a quantity to be detected (an acceleration, a pressure, a force, etc.).

For instance, Micro-Electro-Mechanical-System (MEMS) sensors will be referred throughout as exemplary of accelerometers where solutions as described herein can be applied.

These sensors can be produced with micro-fabrication techniques applied to semiconductor materials and comprise a fixed body ("stator") and a mobile mass ("rotor") of doped semiconductor material connected via elastic elements ("springs") and constrained so that the rotor has, with respect to the stator, pre-set translational and/or rotational degrees of freedom.

The stator and the rotor include mutually facing arms that define capacitors having a capacitance that varies as a function of the relative position of the arms, namely as a function of the relative position of the rotor with respect to the stator. Consequently, when the sensor is "affected" by a dynamic entity to be determined, the rotor shifts and a capacitive unbalancing of the pairs of capacitors results from which it is possible to determine (measure) that entity.

Different types of MEMS sensors (linear or rotational, for instance) can be devised with operation based on variation of a gap (the distance between the mobile arms in the rotor and the respective fixed arms in the stator) and/or variation of a degree of mutual facing between of the mobile arms and the respective fixed arms).

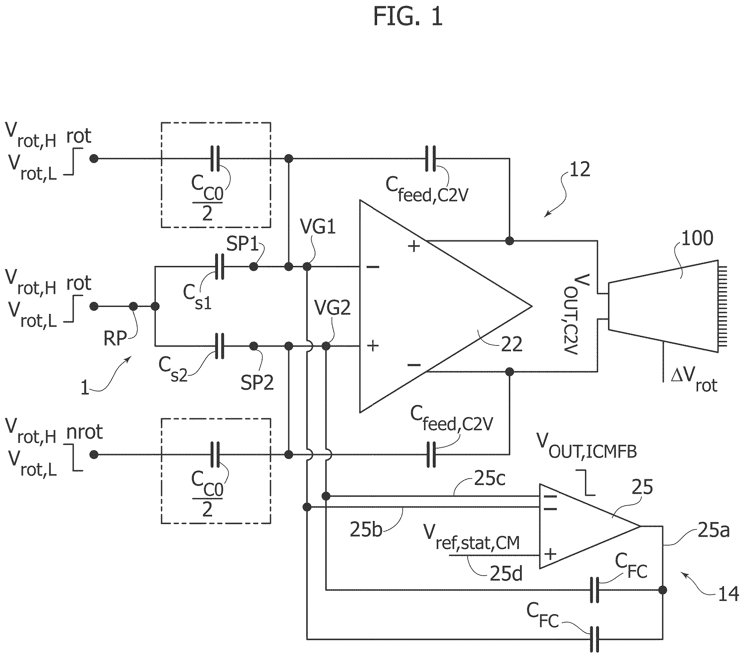

Figure 1 schematically illustrates an (otherwise conventional) circuit for a differential capacitive sensor 1.

This may be, by way of example, of a linear MEMS type, but the following description essentially applies also to sensors having different configurations.

In a manner known per se, such a differential capacitive sensor 1 (whose structure is not detailed in Figure 1 for simplicity: documents EP 1 790 988 B1 and US 9 201 090 B2 - already cited - and the further literature cited therein can be referred to for a more detailed explanation) comprises a stator (including fixed arms) and a rotor constituted by a mobile mass and by mobile arms fixed to the mobile mass.

For instance, each mobile arm is set between a respective first fixed arm and a second fixed arm. The mobile mass is suspended via springs to anchoring elements, and is mobile along an axis x that constitutes the preferential axis of detection of the differential capacitive sensor 1.

The fixed arms are electrically connected to a first stator terminal (stator pad SP1) and to a second stator terminal (stator pad SP2) respectively, whilst the mobile arms are electrically connected to a rotor terminal (rotor pad RP).

The differential capacitive sensor 1 illustrated in Figure 1 has an equivalent electrical circuit comprising a first sensing capacitor $C_{s1}$ and a second sensing capacitor $C_{s2}$, with plane and parallel faces, arranged what can be essentially regarded as a "half-bridge" configuration, that is having in common the rotor pad or terminal RP.

The capacitances of the first sensing capacitor $C_{s1}$ and of the second sensing capacitor $C_{s2}$ are variable as a function of the distance between the mobile arms and the fixed arms and thus as a function of the displacement of the rotor with respect to the stator.

For instance, the first sensing capacitor $C_{s1}$ is the parallel of the capacitances formed between a first fixed arm and the mobile arms, whilst the second sensing capacitor $C_{s2}$ is the parallel of the capacitances formed between the second fixed arm and the mobile arms.

When the differential capacitive sensor 1 is subjected to an acceleration (along an axis x, for instance) the mobile mass therein moves along that axis, and consequently a capacitive variation of the first sensing capacitor $C_{s1}$ and a capacitive variation of the second sensing capacitor $C_{s2}$ occur.

These variations are equal in absolute value and opposite in sign.

Sense circuitry 12 coupled to the differential capacitive sensor 1 may thus include a charge-integrator interface stage (or charge-amplifier, operating as charge-to-voltage or C2V converter) with various amplification, filtering, noise cancelling and analog-to-digital conversion stages associated therewith.

The sense circuitry 12 applies a read step *rot* (a voltage in the region of a few volts) to the rotor terminal RP, detects a resulting capacitive unbalancing of the sensing capacitors $C_{s1}$ and $C_{s2}$, and generates - based on the capacitive unbalancing detected - an output electrical signal related to the quantity that is to be detected.

As noted, capacitive sensors as considered herein can be used in applications with low supply voltages and low consumption; in those applications, performance of the sense circuitry in terms of resolution and thermal and long-term (ageing) stability plays a significant role.

Readout techniques that are as immune as possible from error, such as noise (thermal noise and low-frequency noise) and offset are thus advantageous.

Papers such as M. Lemkin, et al.: "A Three-Axis Micromachined Accelerometer with a CMOS Position-Sense Interface and Digital Offset-Trim Electronics", IEEE Journal of Solid-State Circuits, Vol. 34, No. 4, April 1999, pp. 456-468 propose using of fully differential sense circuits of the switched-capacitor type (operating in discrete-time).

This facilitates operating at low supply voltages and reducing current consumption along with other advantages (increased rejection of noise from the supply and/or from the substrate; reduction of errors due to charge injection or "clock feedthrough"; and increased dynamics).

It is otherwise noted that the read step applied to the rotor terminal RP (this is chosen as wide as possible in order to increase the signal-to-noise ratio at the output of the sense stage) produces a common-mode signal at the inputs of the charge integrator of the interface stage.

As illustrated in Figure 1, this charge integrator can be built around a first fully differential stage 22 (an operation amplifier or OPA, hereinafter referred also as the C2V OPA) arranged with its inputs coupled to the sensing capacitors $C_{s1}$ and $C_{s2}$ and its outputs providing therebetween an output signal $V_{OUT,C2V}$ from the sensor to be applied to an analog-to-digital converter (ADC) 100.

The (digital) output signal from the ADC 100 can be supplied to a user device such as a microprocessor, for instance (this is not visible for simplicity), possibly after digital filtering and decimation.

Charge integrator operation of the OPA 22 in the circuitry 12 involves first and second feedback capacitors $C_{feed,C2V}$ coupled between each one of the outputs and a respective input of the OPA 22, these inputs providing virtual ground nodes VG1 and VG2 of the OPA.

A common-mode signal can be caused by a common-mode amount of charge (an amount of charge that is the same on both inputs of the charge integrator built around the OPA 22) injected by the first sensing capacitor $C_{s1}$ and by the second sensing capacitor $C_{s2}$ following application of the read step.

Cancelling that common-mode signal is desirable in order to keep the sense circuitry 12 in a correct operating region, by maintaining the stator voltages VG1 and VG2 at a fixed voltage.

As proposed in the article discussed above, that issue can be addressed by resorting to an input-common-mode control circuit 14 of an active type, which uses a feedback loop (so-called ICMFB - Input-Common-Mode Feedback) built around a further differential stage 25 (an operation amplifier or OPA, hereinafter also referred to as the ICMFB OPA) having an output 25a as well as negative inputs 25b, 25c connected, respectively, to the first stator terminal SP1 (virtual ground VG1 of the OPA 22) and to the second stator terminal SP2 (virtual ground VG2 of the OPA 22) plus a further positive input 25d configured to receive a reference voltage $V_{ref.stat,CM}$.

The ICMFB stage 14 built around the amplifier circuit (OPA) 25 includes first and second feedback capacitors $C_{FC}$ from the output 25a to the inputs 25b, 25c of the OPA 25 and thus to the first virtual ground VG1 and to the second virtual ground VG2 of the OPA 22.

In use, the amplifier circuit 25 (the structure and operation of such an amplifier are described in detail in the article referred to above) operates as a switched-capacitor circuit having an output 25a, a first differential negative input 25b and a second differential negative input 25c, which are connected, respectively, to the input nodes SP1, SP2, that is to the inputs of the sense operational amplifier 20, and a reference positive input 25d, connected to a reference-potential line at a voltage $V_{ref.stat,CM}$.

In use, the amplifier circuit 25 detects the voltages at the first differential input 25b and the second differential input 25c, determines a mean (average) value thereof and can generate at the output 25a a feedback voltage $V_{OUT,\ ICMFB}$ proportional to the difference between the reference voltage $V_{ref.stat,\ CM}$ at the input 25d and that mean.

The voltage $V_{ref.stat,CM}$ is a voltage reference whose voltage value is forced, through the ICMFB subsystem, to the semi-sum of the stator voltages. The value of the voltage $V_{ref.stat,CM}$ is established according to MEMS specifications: in fact, each sensor operates on a defined voltage on the stator. The value of the voltage $V_{ref.stat.CM}$ is selected to be compatible with the input dynamic ranges both the C2V and ICMFB OPAs 22 and 25. A possible choice for $V_{ref.stat,CM}$ may lie between $V_{rot,H}$ and $V_{rot,L}$, typically as the average value thereof.

Reading of the differential capacitive sensor 1 is obtained by supplying to the rotor terminal RP (and to the mobile mass 3) a stepped read signal *rot* (switching between a low value $V_{rot,L}$ to a high value $V_{rot,H}$).

The charge integrator built around the OPA 22 integrates the differential amount of charge supplied by the first sensing capacitor $C_{s1}$ and by the second sensing capacitor $C_{s2}$ (as produced by the capacitive unbalancing of the two capacitors), and consequently generates the output voltage $V_{OUT,C2V}$ to be supplied to the output analog-to-digital converter (ADC) 100.

The converter 100 is assumed to be supplied with fixed voltage reference *Vref,* that is the ADC reference, whose value is typically $\Delta V_{rot}$, namely a value indicative of the amplitude of the step of read signal *rot* between the low value $V_{rot,L}$ and the high value $V_{rot,H}$.

Typically, $V_{rot,L}$ can be chosen equal to GND, so that $V_{rot,L} = \Delta V_{rot} = V_{rot}$ where $V_{rot}$ is the rotor voltage reference generated by the ASIC.

The ADC 100 operates based on a reference, which becomes the denominator of the reading, that is the ADC 100 actually computes the ratio $V_{OUT,C2V}/Vref$ The value $\Delta V_{rot}$ is typically used as a reference is because the signal $V_{OUT,C2V}$ is directly proportional to $\Delta V_{rot}$, so using $\Delta V_{rot}$ as a reference, the dependence on $\Delta V_{rot}$ is cancelled, and ideally the total sensitivity of the system (acceleration >>> digital output) no longer depends on any voltage generated by the ASIC.

This makes architecture as described more reliable in case, for some reason (soldering stress, bending, humidity etc.), a drift (and in particular a drift of $\Delta V_{rot}$) affects the voltages generated by the ASIC.

The following phraseology is currently adopted in the context described in the foregoing and is recalled here for immediate reference.

Inertial Measurement Unit (IMU): this is a system (like the solution referred to as Suwon3 further discussed in the following) that includes a gyroscope and an accelerometer.

*g:* is the unit of measurement of external acceleration currently used in accelerometers; $1g = 9.81$ *m/s²*.

Accelerometer: a system configured to convert an external acceleration to a (digital) output signal; this may include a mechanical sensor (MEMS, for instance) 1 and an electronic chain - elements 12, 14, 100 in Figure 1, for instance - for sensor readout (including an application specific integrated circuit or ASIC, for instance).

Capacitive sensor: a sensor capable of converting an input stimulus (acceleration in case of an accelerometer) into a capacitive mismatch between two "sensing capacitors" ($C_{s1}$ and $C_{s2}$ in Figure 1 for instance). Associated electronic circuitry can sense this mismatch and convert it into a voltage signal and then into a digital output word, with the possibility of correct some intrinsic non idealities, such as non-linearity.

Accelerometer sensor: a mechanical structure (MEMS, for instance) including a movable mass at a position that is sensitive to the external acceleration; the position of the movable mass position (proportional to acceleration) can be monitored via sensing capacitors. Sensing capacitors such as $C_{s1}$ and Cs2 in Figure 1 have one pole connected to the rotor RP to sense a voltage called rotor voltage, and the other pole connected to a stator pad SP1, resp. SP2 at a stator voltage.

MEMS (mechanical) sensor offset: this is the capacitive offset between the two sensing capacitors; in the absence of an offset compensation system, this offset will be a major contributor to ZGL (see below).

Coarse offset: this - per se not explanatory - designation indicates a trimmable offset contribution generated via ASIC used to neutralize the MEMS mechanical sensor offset to counter saturation of the associated electronic circuitry.

Rotor: this is the movable "floating" mass of the accelerometer; it is mechanically coupled to one of the sensing capacitors plates (or poles).

Rotor pad: this indicates an electrical contact such as RP of the rotor, at a voltage forced by an ASIC through a wire, for instance.

Rotor voltage: this is the voltage provided at the rotor pad RP.

Stators: these are fixed bodies (masses) of the accelerometer; they are mechanically coupled to the other sensing capacitors plates (or poles).

Stator pads: these are the electrical contacts (such as SP1 and SP2, for instance) of the stators that can be forced via ASIC through associated wires.

Stator voltages: these are the specific voltages forced by ASIC.

Mechanical sensitivity: this indicates how much the sensing capacitor(s) vary versus unitary external acceleration $1g$ (this is typically indicated as *fF/g,* femto-farad over g).

Mechanical sensitivity curve: this is a graph showing the variation of the capacitance of a sensing capacitor versus an external acceleration (for instance, from -16g to +16g). In the ideal case of absence of any non-linearity, this curve is a straight line having a slope (angular coefficient) that indicates mechanical sensitivity.

Non-linearity of a (MEMS, for instance) accelerometer: this indicates how extensively the actual (non-linear) mechanical sensitivity curve differs from an ideal straight line.

Electrical sensitivity: this indicates how much the final digital output of the electronic chain of the accelerometer varies versus a (unitary) variation of the sensing capacitance (typically this is indicated as *LSB/g*).

Electrical sensitivity curve: this corresponds to the mechanical sensitivity curve, applied - mutatis mutandis - to electrical sensitivity.

Analog electrical sensitivity: this indicates how much the analog output of the electronic chain of the accelerometer (upstream an output ADC such as the AC 100) varies versus a (unitary) variation of the sensing capacitance (typically this is indicated as *V/g)*.

Analog-to-digital (ADC) sensitivity: this is a measure of how much the digital signal output from the ADC converter (reference 100 in Figure 1) varies versus a unitary analog input to the converter (typically this is indicated as *LSB/V)*.

Overall sensitivity: this is a measure of how much the digital signal output from the ADC converter varies versus unitary external acceleration 1*g*; typically, this is indicated as in *LSB/g)* and is the product of electrical sensitivity times mechanical sensitivity.

Overall sensitivity curve: this is the product of electrical sensitivity curve and the mechanical sensitivity curve.

Overall non-linearity: this is conceptually like accelerometer non-linearity, and indicates how extensively the actual (non-linear) overall sensitivity curve differs from an ideal straight line; this represents an entity to be desirably reduced (minimized): being the product of electrical sensitivity and mechanical sensitivity, overall non-linearity can be minimized if non-linearity of electrical sensitivity compensates non-linearity of mechanical sensitivity.

Accelerometer full scale: this is the highest (maximum) external acceleration that can be read by a mechanical sensor; electronic full scale is typically tuned to match accelerometer full scale; "full scale" will thus be simply referred to throughout this description.

Zero-g-level or ZGL: this represents a DC offset that may affect the accelerometer output chain; desirably, it should not exhibit drift versus temperature, humidity, external vibrations (see VRE below).

Device Under Test (DUT): this will be assumed to be a single device throughout this description.

Vibration Rectification Error (VRE): this is a physical phenomenon related to ZGL drifts in an accelerometer of some tens or hundreds of mg (milli-g) when a high-frequency (>1*kHz*) external vibration is forced on the accelerometer itself; a typical accelerometer bandwidth is around *1kHz,* which means that a vibration at higher frequencies should be rejected or attenuated. This rejection/attenuation is per se expected, while a drift of ZGL, that is a non-linear behavior, is less expected in so far as an input acceleration at a certain frequency should cause an output response at the same frequency (linear behavior) and not a low frequency output drift (non-linear response).

Vibration Induced Noise (VIN); this is related to VRE, that is a noise increase when an external vibration is applied to accelerometer: this another type of behavior not expected in a fully linear sensor.

A major issue related to parallel-plate based MEMS accelerometer is the non-linearity of the mechanical sensitivity curve. This issue (related to high external acceleration sensing) lies at the basis un undesired accelerometer behavior, like VRE (vibration rectification error) and VIN (vibration induced noise).

An electronic chain associated with a sensor 1 as discussed in the foregoing may seek to rectify this intrinsic non-ideal behavior by acting on the electrical sensitivity curve. Such an electronic chain can be designed in order to reduce the overall non-linearity of the accelerometer, thus providing a reliable digital output also in the presence of an external acceleration near to full-scale acceleration.

Desirably, such an electronic chain should be robust against electronics and mechanical corner and "Montecarlo" variations (namely mechanical offset), be easy to industrialize and should not require an excessive calibration effort.

An implementation of an electronic chain as discussed in the foregoing in connection with Figure 1 is currently referred to as "Suwon3 XL" implementation.

This is based on a switched-capacitor (switched-cap) analog front end. Communication between a MEMS sensor 1 and ASIC processing circuitry 12, 14 (built around the OPAs 12 and 14) is fully analog and involves one rotor pad RP and two stator pads (input nodes) SP1, SP2.

From an electric point of view, the impedance seen by the ASIC from the rotor pad RP to the stator pads SP1, SP2 can be modeled via the sensing capacitors $C_{s1}$ and $C_{s2}$ having capacitance values that depends on the position x of the movable mass of the accelerometer.

In the absence of non-linearity, the position x is directly proportional to the external acceleration via the spring constant of the spring coupling the movable mass and the rotor pad so that the position of the mass x can be regarded as equivalent to the external acceleration *a_ext)*.

Essentially the following relationships apply

$$C_{s1} = \frac{C_0}{1 + \dfrac{x}{g}}$$

$$C_{s2} = \frac{C_0}{1 - \dfrac{x}{g}}$$

where $C_0$ is a sensing capacitor capacitance at rest (with no input acceleration), *g* is the sensing capacitor gap, *x* is the movable mass position, directly proportional to external acceleration. These relationships explain a DC transfer function from external acceleration to sensing capacitor.

The fact that $x$ appears at the denominator is the unavoidable origin of mechanical sensor non linearity.

In architecture as illustrated in Figure 1, a readout procedure can include a sequence of steps.

Stator pads, SP1, SP2 are reset at a voltage $V_{ref,stat,CM}$, then reset is de-asserted. This involves reset switches (not visible for simplicity) coupled to the stator pads SP 1, SP2 at the inputs of the OPA 22 (at one end of the capacitors $C_{feed,C2V}$) while other reset switches (likewise not visible for simplicity) are coupled to the output of the OPA 22 and to the output of the OPA 25 (at the other end of the capacitors $C_{feed,C2V}$ and $C_{FC}$).

The MEMS rotor commutates (ascending, from $V_{rot,L}$ =0 to $V_{rot,H}$ =1.4$V$, for instance - these are merely exemplary values) thanks to a rotor driver. Stators voltage remain fixed at $V_{CM}$ = $V_{ref,stat,CM}$ =0.7V (again a merely exemplary value) thanks to a readout circuitry comprising the fully differential OTA 22 and the two feedback capacitors $C_{feed,C2V}$ connected from the OTA output to the stators SP1, SP2 controlling the voltage difference between two stators and forcing it to 0V.

The single ended OTA 25 dedicated to ICMFB loop has two capacitors $C_{FC}$ connected from the (only) output of the OTA 25 to the stators SP1, SP2 controlling the stator voltage semi-sum and forcing it to $V_{ref,stat,CM}$.

A first charge:

$$Q_1 = C_{s1}(V_{rot,H} - V_{rot,L}) = C_{s1}(\Delta V_{rot}) = C_0/(1+x/g)(\Delta V_{rot})$$

is injected from the rotor pad driver (on ASIC) into the MEMS rotor.

The same charge, coming the MEMS first stator pad, is then collected by the first ASIC virtual ground.

The virtual grounds VG1, VG2 are the input nodes of the OPA 22, that are also the stator pads SP1, SP2.

A second charge:

$$Q_2 = C_{s2}(V_{rot,H} - V_{rot,L}) = C_{s2}(\Delta V_{rot}) = C_0/(1-x/g)(\Delta V_{rot})$$

is injected from the rotor pad driver (on ASIC) into the MEMS rotor.

The same charge, coming the MEMS second stator pad, is then collected by the second ASIC virtual ground.

The charge difference $Q_2$-$Q_1$ is integrated through $C_{feed,C2V}$, defining a differential output voltage transition of

$$V_{OUT,C2V} = (Q_2 - Q_1)/C_{feed,C2V} = [(2x/g)/(1-(x/g)^2)][C_0/C_{feed,C2V}]\Delta V_{rot}$$

The charge sum $Q_2$+$Q_1$ is integrated through $C_{FC}$, defining a single ended voltage transition of

$$V_{OUT,ICMFB} = -(Q_2 + Q_1)/C_{FC} = -2/[(1-(x/g)^2)][C_0/C_{FC}]\Delta V_{rot}$$

To be precise (and as also indicated in the figures), a low-to-high rotor transition corresponds to a high-to-low ICMFB transition, therefore that voltage is negative.

The purpose of the analog front-end as discussed herein is:

to store as $V_{OUT,C2V}$ a signal whose transition versus reset voltage (i.e. versus before rotor transition voltage) is directly proportional to the external acceleration (proportional to $x$), collecting the differential charge $Q_2$-$Q_1$ and keeping at zero the stator voltage difference; this is the task of the OPA 22 (hereinafter the C2V OPA), and
to compensate the common mode charge $Q_2$+$Q_1$, keeping the voltage $V_{ref,stat,CM}$ at the stator voltage semi-sum; this is the task of the OPA 25 (hereinafter the ICMFB OPA).

Reference, as made herein, to - transitions - in connection with $V_{OUT,C2V}$ and $V_{OUT,ICMFB}$ takes into account the fact that reference is made not to the absolute voltages that occur in response to a rotor transition, but rather to the displacement (variation) of those voltages with respect to the respective voltages considered immediately after resetting (or before rotor transition).

In the case of $V_{OUT,C2V}$, this is not particularly significant, in so far as, after reset the differential voltage at the output of the C2V OPA 22 is zero, so the post-rotor transition displacement is equal to the indicated voltage.

In the case of the ICMFB loop, however, things are different in so far as the initial voltage (post-reset) may be, by way of exemplary, non-limiting value, 0.7 V while the final voltage is 0.7 V + the quantity indicated. In other words, the value 0.7 V is a sort of "baseline" value that is then subtracted by the ADC 100 before that voltage becomes the actual reference of the ADC itself (this occurs in manner known per se to those of skill in the art, which is of no specific relevance for the implementation of the solution proposed herein). The simplest way to take this distinction into account is to refer to "transitions" instead of (absolute) voltages.

The exemplary front-end illustrated is a switched cap front-end because the acceleration-to-voltage conversion is not time-continuous: it takes place in the exact moment of the low-to-high (or high-to-low) commutation of the rotor voltage.

One reset, one rotor commutation generates one analog data at C2V OPA output, to be converted to digital by the ADC 100.

After the ADC 100 had stored its input signal and reference, a new readout iteration can start with a new reset operation.

Each double readout operation (ascendent rotor-descendent rotor), can thus be regarded as consisting of the following steps:

> reset,
> "ascendent" rotor commuting,
> ADC sampling,
> new reset
> "descendent" rotor commuting,
> ADC sampling,
> new reset,
> and so on.

In other words, each readout operation is performed with an opposite rotor transition with respect to the previous one. This sign inversion is rectified at the ADC stage 100 with an input chopper (not visible in Figure 1 for simplicity) that is commuted at every reset.

The ADC 100 converts to digital the output signal $V_{OUT,C2V}$ from the OPA 22. To that effect the ADC 100 can have applied a voltage reference so that a ratio between the input signal $V_{OUT,C2V}$ and the reference value can be computed to produce an ADC output signal.

Since $V_{OUT,C2V}$ is in turn proportional to $\Delta V_{rot}$, it is advantageous to select such a reference as $V_{ref} = \Delta V_{rot}$ to make the system independent of $\Delta V_{rot}$ and its non-ideality factors (offset, noise...) so that for the ADC output $ADC_{OUT}$ the following relationship applies:

$$\mathrm{ADC}_{OUT} \propto [(2x/g)/(1-(x/g)^2)][C_0/C_{feed,C2V}]$$

so that $ADC_{OUT}$ is, as a first approximation, linear with $x$, so proportional to input acceleration.

However, when $x$ becomes comparable to $g$ (that is in presence of a high input acceleration), $ADC_{OUT}$ is no longer linear with $x$ because of the denominator $1-(x/g)^2$.

Also:

> a MEMS is not an ideal differential capacitor;
> some process non-idealities may result in the rotor mass being off-center with respect to the stators parallel plates; this means that, also in the absence of an input acceleration signal, a residual differential capacitive signal $C_{s1}-C_{s2}$ is applied to the ASIC reading chain. This effect is known as natural sensor offset;
> a most representative parameter of sensor offset is the mass position at rest, that is notionally zero in the absence of offset; the capacitances of parallel plate capacitors in the presence of sensor offset can be expressed as

$$C_{s1} = C_0/\{1 + [(x-x_0)/g]\}$$

$$C_{s2} = C_0/\{1 - [(x-x_0)/g]\}$$

For instance, by way of non-limiting example, $x_0 = 0.6\ \mu m$ and $g = 2\ \mu m$ (where $-x_0$ is the rotor mass displacement versus the centered position, between the two stators, "at rest") correspond to a ~12$g$ equivalent MEMS sensor offset. That is a huge offset for a typical MEMS sensor, but is considered in specifications Suwon3 family circuitry.

In the presence of offset, the differential charge injected into the virtual grounds is:

$$Q_2 - Q_1 = \{[2C_0(x-x_0)/g)]/[1-(x-x_0)^2/g^2]\}\Delta V_{rot}$$

Natural sensor offset can be dealt with using an offset compensation system referred to as "coarse offset".

The compensation sub-system is capable of subtracting the portion of charge difference added by the natural sensor offset, allowing the C2V OPA (OPA 22) to read only the charge difference generated by external acceleration.

A "coarse offset" approach can be implemented as illustrated in Figure 1, namely using (trimmable) capacitors $C_{CO}/2$ connected to the virtual grounds VG1, VG2 and driven by a transition from $V_{rot,L}$ to $V_{rot,H}$ analogous (or opposite depending on the natural coarse offset sign) to that of the MEMS rotor.

That is, these coarse offset capacitors are driven with inverted signals, that is, when the rotor goes "up", one capacitor goes up and the other capacitor goes down (which is the case in the figure), while when the rotor goes "down", one capacitor goes down and the other capacitor goes up. To switch coarse offset sign, when the rotor goes "up", one capacitor goes down and the other capacitor goes up, while when the rotor goes "down", one capacitor goes up and the other capacitor goes down.

Essentially the capacitance $C_{CO}$ and the sign can be chosen to compensate the effect of the natural sensor offset on the voltage $V_{OUT,C2V}$ output from the OPA 22 while the ICMFB loop built around the OPA 25 keeps moving by a voltage depending on the sum of charges $Q_2+Q_1$ (common mode charge).

If x=0 (external acceleration and no rotor mass displacement due to external acceleration), then $V_{OUT,C2V}$=0, but the general expression of $V_{OUT,C2V}$ versus x, in the presence of natural sensor offset $x_0$ becomes even more non-linear than in the absence of natural sensor offset.

The coarse offset block gives a constant voltage contribution to $V_{OUT,C2V}$, independent of the actual MEMS mass position x. Thus, in the end, the coarse offset compensation strategy is only effective in the absence of external acceleration (or, at most, in the presence of a weak acceleration).

The ADC 100 in an arrangement as depicted in Figure 1 may not play an appreciable role in respect of the linearity issue, in so far as that this block only calculates the ratio between the (non-linear) output of the C2V OPA 22 and the constant term $\Delta V_{rot}$.

The digital output from the ADC 100 contains the term x at the denominator, which is consistent with the absence on non-linearity correction in the analog domain.

As already discussed, a possible option is to provide linearity correction via a Digital Signal Processor (DSP) cascaded to the ADC 100, with the possible interposition of (low-pass) filtering and decimation of the data stream to facilitate complying with low-power specifications. As noted, such an approach has various drawbacks: increased area requirement, ASIC cost, and energy consumption; compensation failing to fit equally well to all specimens; performance in terms of linearity penalized by filtering and decimation; vibration rectification error, VRE, for instance.

Consequently, carrying out the rectification as early as possible, possibly avoiding/reducing signal filtering may be desirable, by noting that the ADC 100 also lies at the basis of some sort of frequency shaping.

Solutions as proposed herein aim at complying with that desire by performing rectification/linearization in the analog domain.

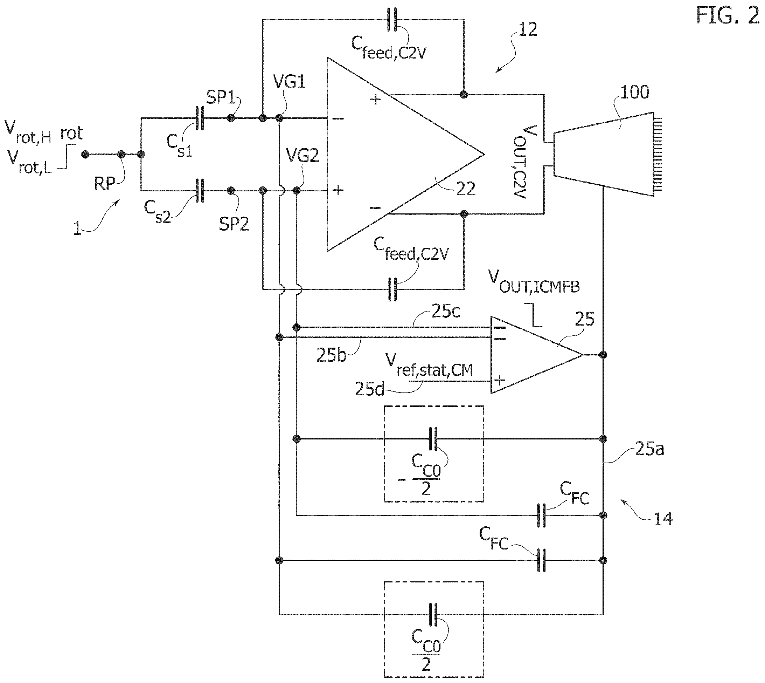

To that effect, solutions as proposed herein and illustrated in Figure 2 may essentially rely on the same general circuit layout presented in connection with Figure 1.

For that reason, parts or elements like parts or elements already introduced and discussed in connection with Figure 1 are designated in Figure 2 with like reference symbols and numbers and a detailed description will not be repeated for brevity.

Also Figure 2 illustrates a switched cap front-end wherein:

acceleration-to-voltage conversion takes place at the moment of the low-to-high (or high-to-low) switching of the rotor voltage (and thus is not time-continuous); and
one reset, one rotor commutation generates one analog signal at the output of the C2V OPA 22 to be converted to digital by the ADC 100 so that, once the ADC 100 has stored its input signal and a reference, a ratio between the input signal $V_{OUT,C2V}$ and the reference can be computed therein to produce an ADC output signal proportional to the ratio and a new readout iteration can start with a new reset operation.

Again, in Figure 2, each (double) readout operation can be regarded as consisting of the following steps:

reset,
"ascendent" rotor commuting,
ADC sampling,
new reset
"descendent" rotor commuting,
ADC sampling,
new reset,
and so on.

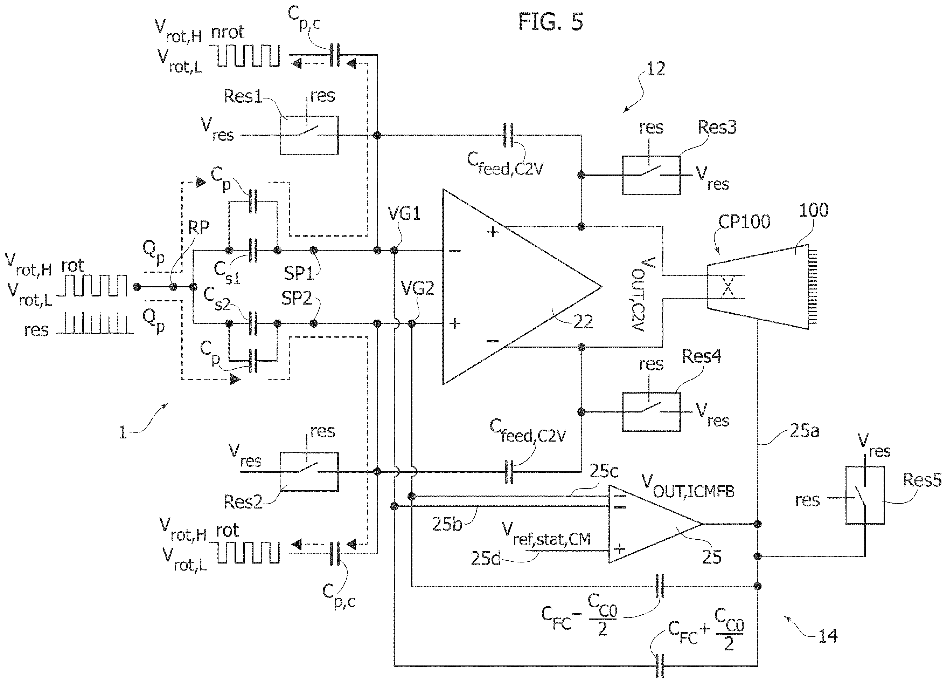

Also in Figure 2, each readout operation can be assumed to be performed with an opposite rotor transition with respect to the previous one, with the sign inversion rectified at the ADC stage 100 with an input chopper (CP100 in Figure 5 and not visible for simplicity in other figures) that is commuted at every reset. Rectification also applies also to the reference value of the ADC 100.

Reset switches (again not visible in Figure 2 for simplicity) coupled to the stator pads SP1, SP2 at the inputs of the OPA 22 (at one end of the capacitors $C_{feed,C2V}$) while other reset switches (likewise not visible for simplicity) are coupled to the outputs of the OPAs 22 and 25 (at the other ends of the capacitors $C_{feed,C2V}$ and $C_{FC}$).

For ease of understanding, operation of an arrangement as illustrated in Figure 2 can be considered as discussed previously for an ascendent rotor commutation (with the reset switches and ADC chopper not visible for simplicity).

For instance, the MEMS rotor can be assumed to commutate (ascending, from $V_{rot,L} = 0$ to $V_{rot,H} = 1.4$ V, - these are again merely exemplary values) thanks to a rotor driver, with stator voltage remaining fixed at $V_{CM} = V_{ref,stat,CM} = 0.7$V (again a merely exemplary value) thanks to the readout circuitry made by:

the fully differential OTA 22 and the two feedback capacitors $C_{feed,C2V}$ connected from the OTA output to the stators SP1, SP2 controlling the voltage difference between two stators and forcing it to 0V; and

the single ended OTA 25 dedicated to ICMFB loop with two capacitors $C_{FC}$ connected from the (only) output of the OTA 25 to the stators SP1, SP2 controlling the stator voltage semi-sum and forcing it to $V_{ref,stat,CM}$.

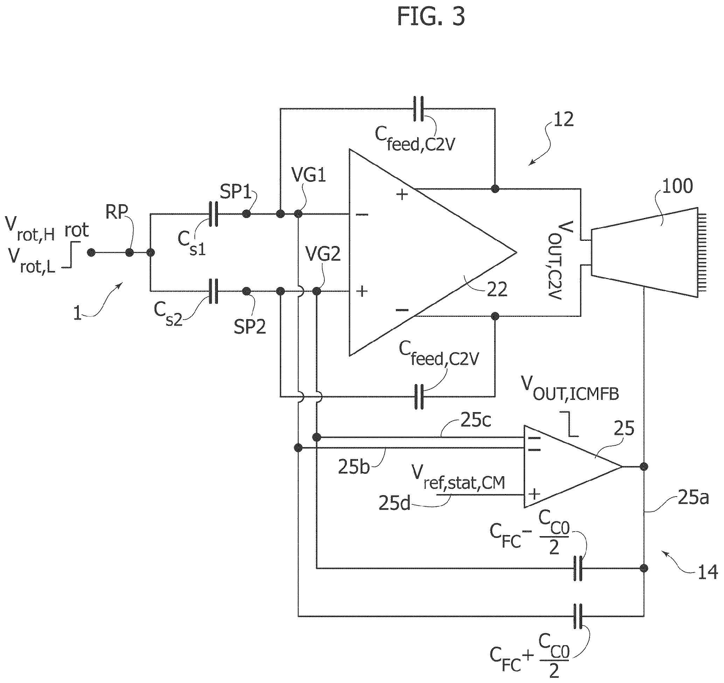

To summarize, a circuit layout as represented in Figure 2 (and Figures 3 to 6 as well) can be considered to comprise:

a first input node SP1 and a second input node SP2 configured to be coupled to a first sensing capacitor *Cs1* and a second sensing capacitor *Cs2* in an accelerometer sensor 1, wherein the sensing capacitors *Cs1, Cs2* exhibit a capacitance unbalance in response to acceleration applied to the sensor 1 and are configured to be charged (in response to the signal $V_{rot,L}$, $V_{rot,H}$ applied to the rotor RP to a first charge $Q_1$ and a second charge $Q_2$, respectively;

a first differential stage 22 coupled (at the virtual grounds VG1 and VG2) to the first input node SP1 and the second input node SP2 with the first differential stage 22 being configured (via the feedback capacitors $C_{feed,C2V}$) to act as a C2V converter (integrator) to provide between output nodes thereof a differential signal $V_{OUT,C2V}$ indicative of the difference $Q_2-Q_1$ between the second charge $Q_2$ and the first charge $Q_1$ wherein that difference is indicative of the capacitance unbalance and thus of the acceleration applied to the sensor 1; and

a second differential stage 25 with double negative inputs (25b, 25c) respectively coupled to the first input node SP1 and the second input node SP2, with a single positive input (25d) coupled with the voltage reference $V_{ref,stat,CM}$.

The second differential stage 25 is configured to provide at an output thereof (the output 25a) a common mode signal $V_{OUT,ICMFB}$ based on the difference between a voltage indicative of a mean value of the stator voltages (SP1 and SP2) - which is indicative of the sum of the second charge Q2 and the first charge Q1, that sum being in turn indicative of non-linearity of the difference between the second charge (Q2) and the first charge (Q1) - and the reference voltage $V_{ref,stat,CM}$.

How the reference voltage $V_{ref,stat,CM}$ can be produced has been discussed previously.

The OPA 25 evaluates the difference between that reference and the average voltage at the stators (SP1 and SP2), while the common mode charge $Q_2+Q_1$ is transferred to the feedback capacitances $C_{FC}$ as an effect of the voltage control of the stators.

Those of skill in the art will otherwise appreciate that the coupling of the nodes SP1, SP2 (that is VG1, VG2) to the non-inverting/inverting inputs of the OPA 22 essentially dictates the signs of the resulting signal $V_{OUT,C2V}$, namely the output sign of the OPA 22, without otherwise affecting circuit operation as described.

That is, in the case of the fully-differential OPA 22, the connection signs of the inputs (inverting/non-inverting) are selected to provide inversion between input and output of a same feedback branch (that is, between input and output via each capacitor $C_{feed, C2V}$).

Coupling between the nodes SP1 and SP2 and the inputs 25b and 25c of the OPA 25 can be changed with no effect on $V_{OUT,ICMFB}$ in so far as the transition sign is opposite to rotor transition sign.

Formulas along the lines of the formulas detailed in the foregoing in connection with Figure 1 may be derived for the arrangement of Figure 2, with the exception of the value of feedback capacitance of the ICMFB OPA 25 being no longer equal to $C_{FC}$ for both feedback branches but rather made different in the two branches with a first "negative" capacitance - $C_{C0}/2$ added from one branch and a second "positive" capacitance + $C_{C0}/2$ added to the other branch, with the purpose of providing both non-linearity compensation and coarse offset as early as possible in the processing chain (advantageously in the analog domain, before or upstream of the ADC) by acting on physical entities and not on purely mathematical relationships (as may be the case of DSP processing downstream of the ADC 100).

Unbalancing of the two feedback capacitances $C_{FC}$ with the additional terms "+" and "-" $C_{C0}/2$ implements the coarse offset without detriment to the linearity advantage acquired by using the ICMFB output as the ADC reference.

In that respect, refering to a (per se non-existing) "negative" capacitance/capacitor of value - $C_{C0}$/2 and a "positive" capacitance/capacitor of value + *Cco*/2 means that such "coarse offset" capacitors are (notionally) arranged parallel to ICMFB feedback capacitances/capacitors of value $C_{FC}$ which in practice means that the actual circuit layout will be essentially as illustrated in Figure 3 with each branch coupled to the virtual grounds VG1, VG2 actually comprising only one capacitor for each virtual ground, for instance a capacitor with value $C_{FC}$ + $C_{C0}$/2 coupled to the virtual ground VG1 and a capacitor with value $C_{FC}$-$C_{C0}$/2 coupled to the virtual ground VG2.

In that way, in architecture as proposed herein, the ICMFB subsystem built around the OPA 25 is not only intended to manage the common mode charge: the voltage signal at the ICMFB output in fact conveys useful information that can be contribute in correcting non-linearities in the output signal $V_{OUT,C2V}$ (prior to conversion to digital in the ADC 100).

For that reason, a capacitance value +/-$C_{CO}$/2 is referred to in discussing Figure 2 that is related to the value $C_{CO}$ mentioned previously in connection with Figure 1 in discussing the possibility of compensating the effect of the natural sensor offset on the voltage $V_{OUT,C2V}$ output from the OPA 22 while the ICMFB loop built around the OPA 25 keeps moving by a voltage depending on the sum of charges $Q_2+Q_1$ (common mode charge).

In fact, by repeating the calculations detailed in the foregoing in connection with Figure 1 for capacitors with values $C_{FC}$ +/- $C_{C0}$/2 coupled to the virtual grounds VG1 and VG2 and selecting $C_{CO} = \frac{x_0}{g} C_{FC}$ , then

$$V_{OUT,C2V} = \frac{Q_2 - Q_1 + Q_{CO}}{C_{feed,C2V}} = \left( \frac{2\frac{x - x_0}{g} + 2\frac{x_0}{g}}{1 - \left(\frac{x - x_0}{g}\right)^2} \right) \frac{C_0}{C_{feed,C2V}} \Delta V_{rot}$$

and

$$V_{OUT,C2V} = \left( \frac{2\frac{x}{g}}{1 - \left(\frac{x - x_0}{g}\right)^2} \right) \frac{C_0}{C_{feed,C2V}} \Delta V_{rot}$$

If x=0, that is no external acceleration and no rotor mass displacement due to external acceleration, $V_{OUT,C2V}$=0, which confirms that the coarse offset implementation proposed herein still compensates natural sensor offset at rest.

In the presence of external acceleration and offset $x_0$, the expression for $V_{OUT,C2V}$ is still non-linear, but the overall non-linearity at the output of the C2V OPA 22 is the same as in the absence of natural sensor offset.

This is in contrast with conventional solutions, where non-linearity further increases in the presence of sensor natural offset.

The solution for coarse offset implementation proposed herein thus largely contributes to non-linearity rectification and, more to the point, counters any undesired increase in non-linearity due to the sensor's "natural" offset from worsening the nonlinearity.

This leads to significant advantages.

In the first instance, it facilitates relaxing requirement on the dynamics of the C2V OPA 22, reducing the risk of saturation.

Also, the remaining non-linearity can be corrected by noting that the ADC can play a role in so far as it "divides" its input by its reference value.

The possibility thus exists of selecting

$$V_{OUT,ICMFB} = -\frac{2}{1-\left(\frac{x-x_0}{g}\right)^2} \frac{C_0}{C_{FC}} \Delta V_{rot}$$

as a reference, which means a division by a quantity that is proportional to $\Delta V_{rot}$, which is as nonlinear as $V_{OUT,C2V}$, thus resulting in:

$$ADC_{OUT} \propto \frac{2\frac{x}{g}}{\dfrac{1 - \left(\dfrac{x - x_0}{g}\right)^2 \dfrac{C_0}{C_{feed,C2V}}}{1 - \left(\dfrac{x - x_0}{g}\right)^2 \dfrac{C_0}{C_{FC}}}} = \frac{x}{g}\frac{C_{FC}}{C_{feed,C2V}}$$

That is, in an arrangement as illustrated in Figure 2 (and the same essentially applies also to the arrangements illustrated in Figures 3 to 6):

the analog-to-digital converter 100 is configured to convert to digital the ratio of the differential signal transition $V_{OUT,C2V}$ and the common mode signal transition $V_{OUT,ICMFB}$ from the second differential stage (the ICMFB OPA 25) available at the output 25a; and
the second differential stage 25 comprises:

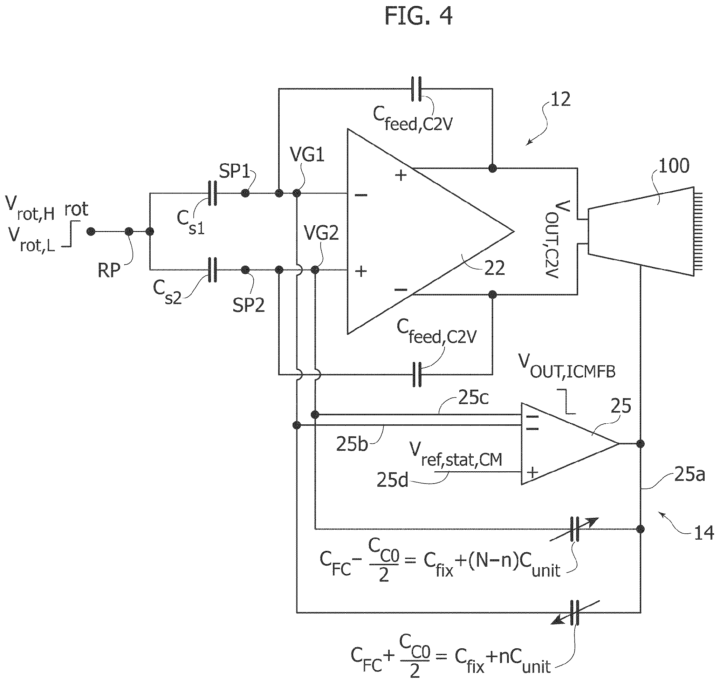

a first capacitive feedback path having a first capacitance value ($C_{FC} + C_{C0}/2$ - in Figures 2 and 3; $C_{fix} + nC_{unit}$ - in Figure 4) from the output 25a of the second differential stage 25 to the first input node SP1, and
a second capacitive feedback path having a second capacitance value ($C_{FC}$- $C_{C0}/2$ - in Figures 2 and 3; $C_{fix}$ + (N-n)$C_{unit}$ in Figure 4) from the output 25a of the second differential stage 25 to the second input node SP2, wherein the first capacitance value is different from the second capacitance value.

An arrangement as illustrated in Figure 2 (and the same essentially applies also to the arrangements illustrated in Figures 3 to 6) thus puts together $\Delta V_{rot}$ dependence cancellation at the ADC stage 100 (as depicted in Figure 1) and an ICMFB subsystem for common mode charge control with an improved coarse offset cell arrangement exploiting ICMFB natural operation and a ratio between the outputs of the C2V OPA 22 and the ICMFB OPA 25 at the ADC stage 100.
Coarse offset capacitor values, one positive and one negative, namely $C_{C0}/2$ for one virtual ground (input node) SP1/VG1 and - $C_{C0}/2$ for the other virtual ground (input node) SP2/VG2 are in parallel with $C_{FC}$ and can be simply implemented by sizing the ICMFB feedback capacitors as $C_{FC} + \dfrac{C_{C0}}{2}$ and $C_{FC} - \dfrac{C_{C0}}{2}$, that is $C_{FC} \pm \dfrac{C_{C0}}{2}$.

Advantageously, these values can be configured to be "trimmable", and thus able to compensate natural offset in different samples, thus providing compensation that fits equally well to different specimens.
This result (as schematically represented in Figure 4) can be achieved by implementing the coarse offset capacitors (feedback capacitors of the ICMFB OP AMP 25) as:

two fixed ICMFB feedback capacitors having a capacitance $C_{fix}$, and
each coupled in parallel with respective first and second trimmable capacitors $C_{FC,T1}$ and $C_{FC,T2}$ having capacitance values $C_{FC,T1} = nC_{unit}$ and $C_{FC,T2} = (N - n)C_{unit}$
where n is a positive integer number that is the actual trimming value of coarse offset, going from 0 to $N$ (where $N$ is supposed to be an even integer number) and $C_{unit}$ is an elementary capacitance step to be selected based on a desired resolution in natural offset compensation.

In practice:

n = 0 means that all coarse offset capacitors are parallel to one $C_{fix}$
n =N means that all coarse offset capacitors are parallel to the other $C_{fix}$

For $n = \dfrac{N}{2}$ there is zero coarse offset injection, meaning that an equal number $\dfrac{N}{2}$ ᵗ of coarse offset capacitors are parallel to both $C_{fix}$

$$C_{FC} = C_{fix} + \frac{N}{2}C_{unit}$$

$$C_{CO} = (2n - N) \cdot C_{unit}$$

Essentially, $C_{unit}$ can be regarded as a resolution that can be used in the compensation of the natural offset, that is, the smaller the resolution, the smaller the uncompensated offset residue. Referring to linearization, instead, theoretically (that is, if there were no non-linearity contributions other than the one described herein) linearization would be perfect even in the presence of a natural offset residue (that is, if the coarse offset does not compensate perfectly for the natural offset). In the presence of a mismatch between the natural offset of the sensor and the coarse offset, an offset residue but not a non-linearity residue will result at the output of the chain. In other words, linearization does not have a resolution, it would be perfect even if the coarse offset were to compensated poorly the natural offset.

To summarize:

the first capacitance value ($C_{FC} + C_{C0}/2$ in Figure 3 or $C_{fix} + nC_{unit}$ in Figure 4) and the second capacitance value ($C_{FC} - C_{C0}/2$ in Figure 3 or $C_{fix} + (N-n)C_{unit}$ in Figure 4) can be regarded as comprising a base capacitance value $C_{FC}$ or $C_{fix}$ having first and second trimming factors $+C_{C0}/2$ or $nC_{unit}$ and $-C_{C0}/2$ or $(N-n)C_{unit}$, respectively, applied thereto;
as exemplified in Figures 2 and 3, the first capacitance value $C_{FC} + C_{C0}/2$ and the second capacitance value $C_{FC} - C_{C0}/2$ can be regarded as comprising a base capacitance value $C_{FC}$ having a same trimming factor $+C_{C0}/2$; $-C_{C0}/2$ added thereto and substracted therefrom, respectively;
as exemplified in Figure 4, the first capacitance value $C_{fix} + nC_{unit}$ and the second capacitance value $C_{fix} + (N-n)C_{unit}$ can be regarded as comprising a base capacitance value $C_{fix}$ having first $nC_{unit}$ and second $(N-n)C_{unit}$ selectively adjustable trimming factors applied thereto; advantageously:

the first selectively adjustable trimming factor $nC_{unit}$ is configured to be adjusted to $n$ times a capacitance unit $C_{unit}$, and
the second selectively adjustable trimming factor $(N-n)C_{unit}$ is configured to be adjusted to $N-n$ times the capacitance unit $C_{unit}$,
wherein N is a positive even integer; and n is a positive integer trimming value going from 0 to N.

A solution as described herein lends itself to being supplemented with various other features of MEMS readout chains as illustrated in Figure 5, where reset switches Res1, Res2, Res3, Res4, and Res 5 are explicitly illustrated coupled to:

the stator pads SP1, SP2 at the inputs of the OPA 22 (at one end of the capacitors $C_{feed,C2V}$) in the case of the reset switches Res1, Res2;
to the outputs of the OPA 22 (at the other end of the capacitors $C_{feed,C2V}$) in the case of the reset switches Res3, Res4; and
to the output 25a of the OPA 25, in the case of the reset switch Res5.

In Figure 5 an input chopper CP100 of the ADC 100 is also shown that is intended to be commuted (switched) at every reset in order to rectify the sign inversion resulting from each readout operation being performed with an opposite rotor transition with respect to the previous one (ascending v. descending). The same rectifying operation is also carried out on the ADC reference at the ADC 100.

In fact, depending on the direction of the rotor transition, the transition of the ICMFB output is opposite in sign with respect to rotor transition. However, the ADC considers as reference, in any case, only the absolute value of the transition, ignoring the direction, that is the sign thereof.

The ADC 100 thus calculates the ratio of the signal applied thereto and the reference, which is also "rectified".

More specifically, in evaluating the reference, namely, the output of the ICMFB OPA 25 the ADC 100 evaluates the pre-vs-post transition that the ICMFB OPA 25 makes in response to the rotor transition and considers the modulus of this transition: that is, it does not take into account the sign, i.e. the fact that the transition is increasing or decreasing (respectively, when the rotor is decreasing and increasing). In other words, what is evaluated is the modulus the "jump" that the ICMFB makes.

As illustrated in Figure 5, real MEMS may have, parallel to active sensing capacitors $C_{s1}$, $C_{s2}$ (having a capacitance depending on the position $x$ of the mass)

$$C_{s1} = \frac{C_0}{1 + \dfrac{x}{g}}$$

$$C_{s2} = \frac{C_0}{1 - \dfrac{x}{g}}$$

parasitic capacitors $C_p$ that at every rotor transition (for example, ascending) inject a charge $Q_p = C_p V_{rot}$ into both virtual grounds VG1, VG2.

Desirably, the charge $Q_p$ should not integrated via the ICMFB feedback capacitors $C_{FC}$, but should be removed from virtual grounds.

This result can be achieved via two (trimmable) compensating capacitors $C_{p,c}$ with the role of "swallowing" the parasitic charge $Q_p$ thus countering the undesired propagation thereof to and through $C_{FC}$. These compensating capacitors $C_{p,c}$ can be driven by a signal (indicated as *nrot)* opposite to rotor pad signal.

The discussion so far has focused on the possibility of implementing solutions as described herein within a switched capacitor (switched-cap) chain.

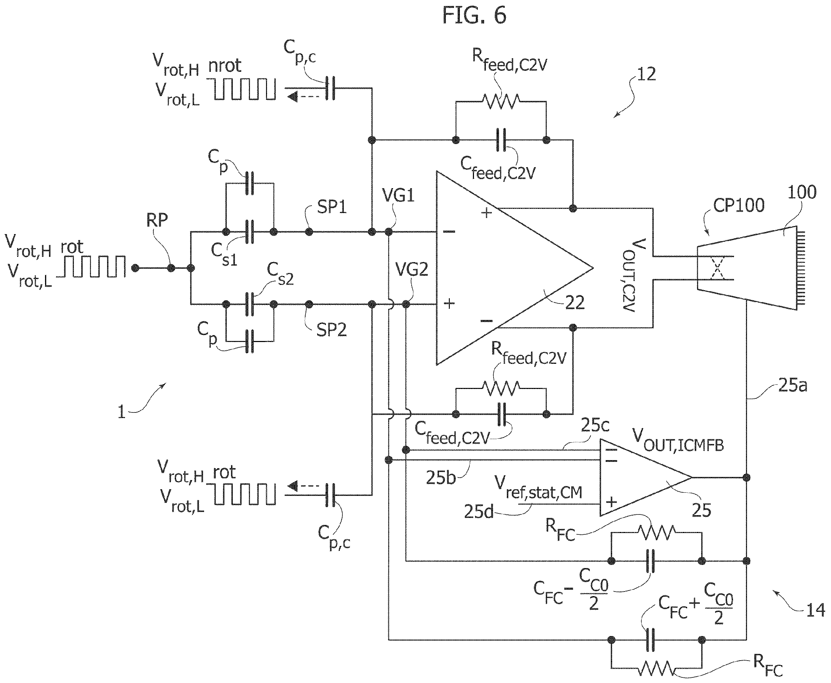

Figure 6 is a circuit diagram illustrative of the possibility of implementing solutions as described herein within a continuous-time chain as an alternative to a switched capacitor (switched-cap) chain.

For simplicity, the representation of a continuous-time chain in Figure 6 is by way of direct comparison with the representation of a switched-cap chain in Figure 5.

It will however be understood that a continuous-time chain as exemplified in Figure 6 may incorporate one or more other features discussed so far with the switched-cap chains in Figures 2 to 4.

A continuous-time chain as exemplified in Figure 6 does not contemplate reset switches and a reset phase and includes feedback resistors $R_{feed,C2V}$ and $R_{FC}$ coupled (in parallel, for instance) to the feedback capacitors in the feedback loops of both the OPA 22 and the OPA 25 in the C2V and the ICMFB loops 12 and 14.

These resistors facilitate controlling the DC components of the stator voltages, with the DC differential stator voltage forced to 0 by the resistors $R_{feed,C2V}$ and the DC common mode stator voltage forced to $V_{ref,stat,CM}$ by the resistors $R_{FC}$.

Time constants $\tau_{C2V} = R_{feed,C2V}C_{feed,C2V}$ and $\tau_{ICMFB} = R_{FC}C_{FC}$ are sized in order to make $\dfrac{1}{2\pi\tau_{C2V/ICMFB}} \ll f_{rot}$ where $f_{rot}$ is the rotor switching frequency and the reference for the ADC 100 is the amplitude of $V_{OUT,ICMFB}$ (that is a square wave at a frequency $f_{rot}$).

To summarize, in the continuous-time implementation exemplified in Figure 6:

the first differential stage (the OPA 22 in C2V loop) comprises respective voltage control resistors $R_{feed,C2V}$ coupled (in parallel, for instance) to feedback capacitors $C_{feed,C2V}$ in feedback paths from the output nodes thereof and the first and second input nodes SP1, SP2;

the second differential stage (the OPA 25 in the ICMFB loop) comprises:

a first voltage control resistor $R_{FC}$ coupled (in parallel, for instance) to the first capacitance value $C_{FC} + C_{C0}/2$ or, possibly, $C_{fix} + nC_{unit}$ in the first capacitive feedback path from the output 25a of the second differential stage 25 to the first input node SP1, and

a second voltage control resistor (likewise designated $R_{FC}$) coupled (in parallel, for instance) to the second capacitance value $C_{FC} - C_{C0}/2$ or, possibly, $C_{fix} + (N-n)C_{unit}$) in the second capacitive feedback path from the output 25a of the second differential stage 25 to the second input node SP2.

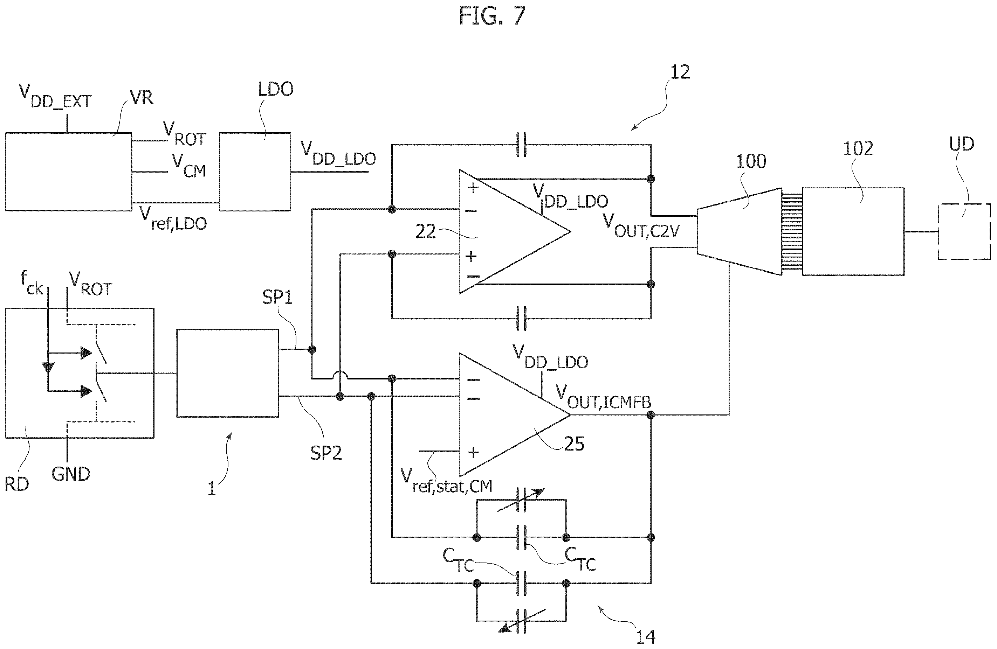

Figure 7 is a more general block diagram exemplary of an arrangement as described in connection with Figures 2 to 6 included in the "front end" of a MEMS-based accelerometer.

For simplicity and ease of explanation, only the key parts and elements (the C2V OPA 22, the ICMFB OPA 25 and the associated feedback capacitors plus the ADC 100) already introduced in connection with Figures 2 to 6 are visible and referenced in Figure 7, where these elements are designated with the same reference symbols appearing in Figures 2 to 6; a detailed description of these parts or elements will not be repeated for brevity.

In Figure 7, a MEMS accelerometer 1 is shown assumed to include the sensing capacitors $C_{s1}$ and $C_{s2}$ associated to the stator pads SP1, SP2 that provide input signals to the capacity-to-voltage (C2V) conversion OPA 22 and to the input common-mode feedback control (ICMFB) OPA 25, this latter OPA having associated feedback capacitors with "fixed" and "trimmable" components, that is feedback capacitors that are trimmable as a whole.

In Figure 7, a rotor driver RD is illustrated configured (in a manner known per se) to rotate the accelerometer rotor under the control of a clock signal $f_{ck}$ and a supply voltage $V_{ROT}$.

Supply circuitry VR such as a bandgap voltage reference is also illustrated, configured (again in a manner known per se) to supply controlled voltages such as $V_{ROT}$ and $V_{CM}$ as mentioned previously as well as a reference voltage $V_{ref,LDO}$

to a Low-Drop Off regulator LDO to provide a regulated converted voltage $V_{DD,LDO}$ for use in supplying the C2V OPA 22 and the ICMFB OPA 25.

Digital processing circuitry 102 (a DSP, for instance) is also illustrated coupled to the output of the ADC 100 to perform processing functions such as digital filtering and decimation in view of applying the resulting signal from the ADC 100 to a user device UD (of any known type).

As discussed in the foregoing, if solutions as discussed herein are adopted (with linearization at least partly performed at the analog front end) the processing tasks allotted to such processing circuitry 102 may be substantially reduced, with corresponding advantages in terms of area occupation and improved performance.

Solutions as described herein are primarily concerned with the (ASIC-based, for instance) electronic processing circuitry configured to provide the signal $V_{OUT,C2V}$ (possibly converted to digital in the ADC 100) as a function of the variation of the capacitances of the sensing capacitors $C_{s1}$ and $C_{s2}$ associated with the accelerometer 1.

Consequently, parts or element such as, for instance, the accelerometer 1, the rotor driver RD, the supply circuitry VG, the regulator LDO as well as the processing circuitry 102 may thus be distinct elements with respect to the electronic processing circuitry that is intended to be coupled therewith (only) by final user. As such, these distinct elements are not part of the embodiments.

By way of summary, in solutions as described herein:

accelerometer (MEMS, for instance) non-linearity is largely compensated directly in the analog domain, in the possible presence of natural sensor offset, operating at the same switching frequency/speed of the front end (and not in digital domain after some filtering);

a same physical principle underlying non-linearity is exploited, avoiding "betting" with polynomials as in the case of full DSP linearization; and

essentially, a same conventional circuitry in the analog domain is used as in conventional prior art, countering undesired effects in term of DSPs area and power consumption: for instance, a coarse offset block can be implemented using capacitance unbalance in existing ICMFB feedback capacitors and not as a separate block with the output voltage of the ICMFB block used as a reference for ADC conversion.

In solutions as described herein front-end integrated circuitry of a parallel-plate-based accelerometer (MEMS, for instance) facilitate non-linearity rectification, also in the presence of natural sensor offset, operating in the analog domain, exploiting a trimmable unbalance of ICMFB feedback capacitors and ICMFB output voltage used as ADC reference.

Solutions as described herein facilitate achieving excellent accelerometer linearity behavior versus full scale, with ensuing good VRE performance, good performance for every device in a range of different devices, so that good performance can be obtained even with devices exhibiting notable sensor offset.

This may be particularly advantageous in consumer products where factors such area, power consumption, package size, and costs play a significant role.

For instance, in solutions as described herein, the electronic processing circuitry can be located in an ASIC area near the stator pads in the accelerometer, with coarse offset capacitors having a small capacitive value, so that typical capacitive structures such as MIM (Metal Insulator Metal) or MOM (Metal Oxide Metal) can be avoided. A H-Bridge close to these capacitors can be likewise avoided.

Without prejudice to the underlying principles, the details and embodiments may vary, even significantly, with respect to what has been described by way of example only without departing from the extent of protection.

The extent of protection is determined by the annexed claims.

**Claims**

1. A circuit, comprising:

a first input node (SP1) and a second input node (SP2) configured to be coupled to a first sensing capacitor (*Cs1*) and a second sensing capacitor (*Cs2*) in an accelerometer sensor (1), respectively, wherein the first and second sensing capacitors (*Cs1, Cs2*) are configured to be charged ($V_{rot,L}$, $V_{rot,H}$) to a first charge ($Q_1$) and a second charge ($Q_2$) and to exhibit a capacitance unbalance in response to acceleration applied to the sensor (1);
a first differential stage (22) coupled (VG1, VG2) to the first (SP1) and second (SP2) input nodes, the first differential stage (22) being configured ($C_{feed,C2V}$) to provide between output nodes thereof a differential signal ($V_{OUT,C2V}$) indicative of the difference between the second charge ($Q_2$) and the first charge ($Q_1$) wherein said difference is indicative of acceleration applied to the sensor (1);
a second differential stage (25) having a first input (25b) coupled to the first input node (SP1), a second input (25c) coupled to the second input node (SP2), and a third input (25d) coupled to a reference voltage ($V_{ref.stat,CM}$), the second differential stage (25) configured to provide at an output thereof (25a) a common mode signal ($V_{OUT,ICMFB}$) based on the difference between the reference voltage ($V_{ref.stat,CM}$) and a voltage indicative of a mean value of a voltage at the first input (25b) and a voltage at the second input (25c), wherein said common mode signal ($V_{OUT,ICMFB}$) is indicative of the sum of the second charge ($Q_2$) and the first charge ($Q_f$); and

an analog-to-digital converter (100) configured to convert to digital a ratio of said differential signal ($V_{OUT,C2V}$) to said common mode signal ($V_{OUT,ICMFB}$);

wherein the second differential stage (25) comprises:

a first capacitive feedback path comprising a first feedback capacitor having a first capacitance value ($C_{FC} + C_{C0}/2$; $C_{fix} + nC_{unit}$) from the output (25a) of the second differential stage (25) to the first input node (SP1), and a second capacitive feedback path comprising a second feedback capacitor having a second capacitance value ($C_{FC} - C_{C0}/2$; $C_{fix} + (N-n)C_{unit}$) from the output (25a) of the second differential stage (25) to the second input node wherein the first capacitance value is different from the second capacitance value.

2. The circuit of claim 1, wherein the first capacitance value ($C_{FC} + C_{C0}/2$; $C_{fix} + nC_{unit}$) of said first feedback capacitor and the second capacitance value ($C_{FC} - C_{C0}/2$; $C_{fix} + (N-n)C_{unit}$) of said second feedback capacitor comprise a base capacitance value ($C_{FC}$; $C_{fx}$) having first ($+C_{C0}/2$; $nC_{unit}$) and second ($-C_{C0}/2$; $(N-n)C_{unit}$) trimming factors applied thereto.

3. The circuit of claim 2, wherein the first capacitance value ($C_{FC} + C_{C0}/2$) of said first feedback capacitor and the second capacitance value ($C_{FC} - C_{C0}/2$) of said second feedback capacitor comprise a base capacitance value ($C_{FC}$) having a same trimming factor ($+C_{C0}/2$; $-C_{C0}/2$) added thereto and subtracted therefrom, respectively.

4. The circuit of claim 2, wherein the first capacitance value ($C_{fix} + nC_{unit}$) of said first feedback capacitor and the second capacitance value ($C_{fx} + (N-n)C_{unit}$) of said second feedback capacitor comprise a base capacitance value ($C_{fx}$) having first ($nC_{unit}$) and second ($(N-n)C_{unit}$) selectively adjustable trimming factors applied thereto.

5. The circuit of claim 4, wherein:

the first selectively adjustable trimming factor ($nC_{unit}$) of the first capacitance value ($C_{fix} + nC_{unit}$) of said first feedback capacitor is configured to be adjusted to $n$ times a capacitance unit $C_{unit}$, and the second selectively adjustable trimming factor ($(N-n)C_{unit}$) of the second capacitance value ($C_{fx} + (N-n)C_{unit}$) of said second feedback capacitor is configured to be adjusted to $N-n$ times said capacitance unit $C_{unit}$, wherein

$N$ is a positive even integer number; and
$n$ is a positive integer number going from 0 to N.

6. The circuit of any of the previous claims, comprising parasitic charge compensating capacitors $C_{p,c}$ coupled to the first input node (SP1) and the second input node (SP2) and configured to counter parasitic charge propagation towards the first capacitive feedback path from the output (25a) of the second differential stage (25) to the first input node (SP1), and towards the second capacitive feedback path from the output (25a) of the second differential stage (25) to the second input node (SP2).

7. The circuit of any of the previous claims, wherein:

the first differential stage (22) comprises respective voltage control resistors ($R_{feed,C2V}$) coupled to feedback capacitors ($C_{feed,C2V}$) in feedback paths from said output nodes thereof and the first (SP1) and second (SP2) input nodes;

the second differential stage (25) comprises a first voltage control resistor ($R_{FC}$) coupled to the first feedback capacitor ($C_{FC} + C_{C0}/2$; $C_{fix} + nC_{unit}$) in the first capacitive feedback path from the output (25a) of the second differential stage (25) to the first input node (SP1), and a second voltage control resistor ($R_{FC}$) coupled to the second feedback capacitor ($C_{FC} - C_{C0}/2$; $C_{fix} + (N-n)C_{unit}$) in the second capacitive feedback path from the output (25a) of the second differential stage (25) to the second input node (SP2).

8. A device, comprising:

an accelerometer sensor (1) including a first sensing capacitor ($Cs1$) and a second sensing capacitor ($Cs2$) wherein the first and second sensing capacitors ($Cs1$, $Cs2$) are configured to be charged ($V_{rot,L}$, $V_{rot,H}$) to a first

**EP 4 760 270 A1**

charge ($Q_1$) and a second charge ($Q_2$) and to exhibit a capacitance unbalance in response to acceleration applied to the sensor (1); and

a circuit according to any of claims 1 to 7 arranged with the first input node (SP1) and the second input node (SP2) coupled to the first sensing capacitor ($Cs1$) and to the second sensing capacitor ($Cs2$) in the accelerometer sensor (1).

9. The device of claim 8, comprising a digital signal processor (102) coupled to the analog-to-digital converter (100) in said circuit and configured to process the ratio of said differential signal ($V_{OUT,C2V}$) to said common mode signal ($F_{OUT,ICMFB}$) converted to digital by said analog-to-digital converter (100), wherein said digital signal processor (102) is optionally configured to apply to the ratio of said differential signal ($V_{OUT,C2V}$) to said common mode signal ($V_{OUT,ICMFB}$) converted to digital by said analog-to-digital converter (100) processing selected out of digital filtering and decimation.

10. A method, comprising:

coupling to a first input node (SP1) and to a second input node (SP2) a first sensing capacitor ($Cs1$) and a second sensing capacitor ($Cs2$) in an accelerometer sensor (1), wherein the first and second sensing capacitors ($Cs1$, $Cs2$) are charged ($V_{rot,L}$, $V_{rot,H}$) to a first charge ($Q_1$) and a second charge ($Q_2$) and exhibit a capacitance unbalance in response to acceleration applied to the sensor (1);

coupling (VG1, VG2) to the first (SP1) and second (SP2) input nodes a first differential stage (22) being configured ($C_{feed,C2V}$) to provide between output nodes thereof a differential signal ($V_{OUT,C2V}$) indicative of the difference between the second charge ($Q_2$) and the first charge ($Q_1$) wherein said difference is indicative of acceleration applied to the sensor (1);

coupling to the first input node (SP1) and to the second input node (SP1) a first input (25b) and a second input (25c) of a second differential stage (25) having a third input (25d) coupled to a reference voltage ($V_{ref.stat,CM}$), wherein the second differential stage (25) provides at an output thereof (25a) a common mode signal ($V_{OUT,ICMFB}$) based on the difference between the reference voltage ($V_{ref.stat,CM}$) and a voltage indicative of a mean value of a voltage at the first input (25b) and a voltage at the second input (25c), wherein said common mode signal ($V_{OUT,ICMFB}$) is indicative of the sum between the second charge ($Q_2$) and the first charge ($Q_1$); and

converting to digital (100) a ratio of said differential signal ($V_{OUT,C2V}$) to said common mode signal ($V_{OUT,ICMFB}$); and

providing in the second differential stage (25):

a first capacitive feedback path having a first capacitance value ($C_{FC} + C_{C0}/2$; $C_{fix} + nC_{unit}$) from the output (25a) of the second differential stage (25) to the first input node (SP1), and

a second capacitive feedback path having a second capacitance value ($C_{FC} - C_{C0}/2$; $C_{fix} + (N-n)C_{unit}$) from the output (25a) of the second differential stage (25) to the second input node wherein the first capacitance value is different from the second capacitance value.

FIG. 1

EP 4 760 270 A1

FIG. 2

FIG. 3

EP 4 760 270 A1

FIG. 4

FIG. 5

EP 4 760 270 A1

FIG. 6

EP 4 760 270 A1

FIG. 7

EP 4 760 270 A1

Europäisches Patentamt
European Patent Office
Office européen des brevets

# EUROPEAN SEARCH REPORT

**Application Number**

EP 25 22 3142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/190615 A1 (MACCIONI ALBERTO [IT] ET AL) 24 June 2021 (2021-06-24) * the whole document * | 1-10 | INV. G01P15/125 G01P21/00 |
| A,D | US 9 201 090 B2 (UNGARETTI TOMMASO [IT]; LASALANDRA ERNESTO [IT] ET AL.) 1 December 2015 (2015-12-01) * the whole document * | 1-10 | |
| A | US 2006/213270 A1 (O'DOWD JOHN [IE] ET AL) 28 September 2006 (2006-09-28) * the whole document * | 1-10 | |
| A,D | M. LEMKIN ET AL: "A three-axis micromachined accelerometer with a CMOS position-sense interface and digital offset-trim electronics", IEEE JOURNAL OF SOLID-STATE CIRCUITS, vol. 34, no. 4, 1 April 1999 (1999-04-01), pages 456-468, XP055155175, ISSN: 0018-9200, DOI: 10.1109/4.753678 * page 457 - page 464 * | 1-10 | TECHNICAL FIELDS SEARCHED (IPC) G01P |

The present search report has been drawn up for all claims

| Place of search | Date of completion of the search | Examiner |
|---|---|---|
| Munich | 15 April 2026 | Springer, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 3142

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2026

| Patent document cited in search report | | Publication date | Patent family member(s) | | Publication date |
|---|---|---|---|---|---|
| US 2021190615 | A1 | 24-06-2021 | CN | 112166313 A | 01-01-2021 |
| | | | EP | 3803307 A1 | 14-04-2021 |
| | | | US | 2021190615 A1 | 24-06-2021 |
| | | | WO | 2019228700 A1 | 05-12-2019 |
| US 9201090 | B2 | 01-12-2015 | CN | 1991313 A | 04-07-2007 |
| | | | EP | 1790988 A1 | 30-05-2007 |
| | | | JP | 5331304 B2 | 30-10-2013 |
| | | | JP | 2007171171 A | 05-07-2007 |
| | | | US | 2007163815 A1 | 19-07-2007 |
| US 2006213270 | A1 | 28-09-2006 | EP | 1861723 A2 | 05-12-2007 |
| | | | US | 2006213270 A1 | 28-09-2006 |
| | | | US | 2007247171 A1 | 25-10-2007 |
| | | | WO | 2006098976 A2 | 21-09-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1790988 B1
- US 9201090 B2
- CN 114679141 A
- US 9461625 B1
- US 2006213270 A1
- US 2007163815 A1
- US 2009223276 A1
- US 2015268268 A1
- US 2021405085 A1
- US 2021190615 A1
- US 2024171188 A1
- US 8094839 B2
- US 10527643 B2

**Non-patent literature cited in the description**

- **M. LEMKIN et al.** A Three-Axis Micromachined Accelerometer with a CMOS Position-Sense Interface and Digital Offset-Trim Electronics. *IEEE Journal of Solid-State Circuits*, April 1999, vol. 34 (4), 456-468